# EUROPEAN PATENT SPECIFICATION

(11) **EP 2 785 545 B1**
(45) Date of publication and mention of the grant of the patent: **19.02.2020**
(21) Application number: 12852646.4
(22) Date of filing: 22.11.2012
(51) Int. Cl.: B60H 1/00, B60H 1/03, F01P 7/16, F01P 3/20

(54) **SYSTEM FOR REGULATING THE LIQUID FLOW IN A VEHICLE**
SYSTEM ZUR REGELUNG DES FLÜSSIGKEITSSTROMS BEI EINEM FAHRZEUG
SYSTÈME DE RÉGULATION DU FLUX DE LIQUIDE DANS UN VÉHICULE

(30) Priority: 29.11.2011 SE 1151136
(43) Date of publication of application: 08.10.2014
(73) Proprietor: Scania CV AB, 151 87 Södertälje (SE)
(72) Inventor: MIKAELSSON, Pär, S-151 44 Södertälje (SE); MAGNUSSON, Emelie, S-113 21 Stockholm (SE); STRÖMBERG, Tony, S-151 32 Södertälje (SE); HALL, Ola, S-117 67 Stockholm (SE); EKMAN, Mats, S-155 32 Nykvarn (SE)
(74) Representative: Scania CV AB
(86) International application number: PCT/SE2012/051287
(87) International publication number: WO 2013/081531

(56) References cited:
- EP-A2- 0 796 752
- WO-A1-2004/022941
- DE-A1- 4 121 379
- JP-A- 2007 223 418
- SE-B- 360 604
- US-A- 3 877 443
- US-A- 4 010 895
- US-A- 4 394 960
- US-A- 6 105 876

## Description

### TECHNICAL FIELD

The present invention relates generally to a coolant system intended for a vehicle. The invention relates particularly to a system for controlling/regulating the flow in the coolant system of a vehicle when starting from cold. The invention is primarily intended for heavy commercial vehicles, e.g. trucks and buses, but may of course also be used in appropriate cases for other types of vehicle, e.g. cars, contractors' machines, boats and other watercraft, aircraft etc. The invention relates also to a vehicle equipped with a system according to the invention.

### STATE OF THE ART

Most vehicles are now provided with some kind of heating system for warming the cab and/or the passenger spaces, particularly in the case of vehicles used on markets with cold operating environments, not least heavy and/or commercial vehicles, e.g. trucks, buses etc.

Such heating systems often integrate the vehicle's body heating system with the engine's cooling system and normally use the warmed cooling water from the engine's coolant circuit which is pumped through various components and radiators on board the vehicle. Vehicles used on markets where outdoor temperatures below zero degrees occur require often a supplementary heater. Such a supplementary heater is for example diesel-powered, is usually situated in the vehicle's body circuit and is usually intended to warm both the vehicle body and the engine. Before the body circuit is allowed to extract full heat from the engine circuit, a certain heat surplus needs to be delivered to the body circuit to support a defrosting action, but without putting the warming of the engine at risk.

It is therefore usual to provide a thermostat in the body circuit to make it possible to prioritise the provision of warm coolant to the body's defrosting circuit in order primarily to defrost the vehicle's windscreen and keep it free from ice, snow and moisture. When the coolant has reached a high enough temperature, the thermostat opens so that the warm coolant will also be pumped out to the rest of the body and the radiators therein in order to heat the driving and passenger spaces.

The same coolant is thus used in both the engine circuit and the body circuit and there is a problem in that there is at present nothing to limit how much thermal energy the body circuit may extract from the circulating coolant. Moreover, there often is in the body circuit a separate circulation pump which causes warm cooling water to circulate specifically in the vehicle's body circuit, thereby hampering or delaying the warming of the engine.

Both when the engine is in operation and when it is switched off, the vehicle's heating system is expected to cope with warming both the engine and the body section.

It is also possible to connect external heat to the body heating system via a so-called RAMP system, which for example supplies warm coolant to the vehicle when it is stationary at a depot and waiting to depart. The intention here is that the vehicle's windows should be free from ice, snow and moisture, the vehicle comfortably warm when the driver is to use it and the engine warm when first starting.

When starting from cold it may take the engine a long time to reach a desired and necessary operating temperature, leading to adverse effects on, for example, the motor oil and hence the engine's service life and also increasing the vehicle's fuel consumption and in some cases the engine's discharges/emissions.

One solution is to use a thermostat which separates the circuits, monitors the engine circuit temperature and only opens to the body circuit when the engine is warm enough, but this entails a problem in providing no way of catering for the possibility that there may be warm coolant in the body circuit which ought to be supplied to the engine.

If the thermostat monitors only the temperature in the engine circuit, it will in fact not open the flow to the engine when heat is available in the body circuit, e.g. when a supplementary heater is being used, or if the vehicle is connected to external heat via a RAMP system.

Using instead a thermostat which closes the flow between engine and body entails risk of the body's separate circulation pump overheating when it can no longer pump the coolant round the system. The overheating protection may also trip in the case of a supplementary heater connected to the body circuit with no possibility of circulating the coolant before the body thermostat opens.

Known integrated systems thus suffer the disadvantage that the engine and the vehicle's body are not warmed quickly and effectively and in an optimum way. Various attempts have been made previously to propose systems which solve the problems relating to warming of engine and body.

US4394960 relates for example to a system comprising a supplementary heater for warming the interior of a vehicle more quickly. It involves fitting a bypass line which separates the engine circuit and the body circuit. The object when starting from cold is to have the body coolant circulate only in the body circuit in order to heat the interior more quickly and, when the coolant has reached a predetermined temperature, to have it also circulate into the engine circuit. This is based on the liquid temperature being raised in the bypass circuit and the thermostat opening when the liquid is warm enough, which is detected by a sensor in the bypass circuit. A valve is also provided which can open and close depending on whether a cold start is intended or not. The valve prevents flow in both directions. A similar arrangement is shown by US 3 877 443.

EP0796752 likewise refers to a system intended to achieve quicker warming of the passenger space by separating the coolant circuits and hence being able to use a smaller supplementary heater. It comprises valves, e.g. a three-way valve, which increase the flow and are controlled by a control unit (ECU) via temperature sensors which detect the temperature in the bypass line. Control may alternatively be via a switching device operated manually by the driver. JP2007223418 refers to a reversing valve which separates liquid systems for engine and passenger space when the engine is not running, so that energy is not consumed to warm the engine block.

Prior art does not refer to any solution pertaining to a simple heating circuit system which makes it possible for the vehicle's engine to be warmed quickly and effectively and which distributes in an optimum way the heat content of the vehicle. Known systems in which the thermostat is situated at the engine circuit outlet, at the heating circuit inlet, suffer the disadvantage that if the coolant temperature in the heating circuit is low the engine risks being cold-flushed when the thermostat opens, which may be harmful for the engine. Feedback to the thermostat will then only take place when the cold coolant from the heating circuit has already passed through the engine before finally reaching the thermostat and closing it.

### SUMMARY OF THE INVENTION

One object of the invention is to solve the above problem and propose a simple heating circuit system which makes it possible mainly to warm the vehicle's engine quickly and effectively and thereafter distribute the heat content of the vehicle's various heating circuit systems in a way which is optimum for both engine and body.

A further object of the invention is that the body circuit should be able to use an available heat surplus from the engine circuit.

A further object of the invention is that the engine circuit should be able to use an available heat surplus from the body circuit.

Another object of the invention is that a leakage flow should be able to pass adjacent to or through the thermostat from the body circuit and open the thermostat when the liquid in the body circuit has reached a certain predetermined temperature but the liquid in the engine circuit has not reached desired working temperature.

Another object of the invention is that it be possible for the leakage flow adjacent to or through the thermostat to be so dimensioned that defrosting action can be achieved in the body circuit with minimum effect on the warming of the engine.

Another object of the invention is primarily to control/regulate the liquid flow also during operation of the vehicle on the basis of the temperature of the engine circuit.

Another object of the invention is to control/regulate the liquid flow during operation of the vehicle on the basis of the temperature of a mixture of body circuit liquid and engine circuit liquid.

Another object of the invention is that the thermostat should open the flow to the engine circuit even when the engine and other electrics and electronics on board the vehicle are switched off but the supplementary heater or external heat supply, e.g. via a RAMP system, is connected.

A further object of the invention is that it should be possible to use only one thermostat, possibly in the form of a two-way valve.

A further object of the invention is that it should be easy to construct, occupy little space, be functional, have a long service life and be easy to install, and that constituent parts be cost-effective to manufacture, fit and maintain.

These and further objects and advantages are achieved according to the invention by a system defined by the features indicated in the independent claim 1.

The invention is achieved by providing a body thermostat comprising a temperature-sensitive element at the junction point between the vehicle's body circuit and engine circuit, and a leakage flow duct at the junction point between the vehicle's two circuit systems, viz. the engine circuit and the body circuit. The leakage flow causes the thermostat to open the flow from the body circuit to the engine circuit if the cooling water in the body circuit is warm enough, e.g. because a supplementary heater is warming the body circuit coolant.

A bypass line is provided in the body circuit so that coolant can circulate freely in this subsystem if the body thermostat is closed, i.e. before the cooling water in the body circuit has reached a high enough temperature to open the body thermostat. The bypass line may preferably be provided with a check valve to prevent coolant from passing through the bypass line instead of via the ordinary engine radiator when the engine is warm and the body thermostat is open.

The body thermostat may also open and provide the engine circuit with warm coolant if external heat is supplied, e.g. by means of a RAMP connection or when the extra heater in the body circuit is used as engine warmer. A certain heat surplus is supplied to the body to ensure defrosting action in the vehicle's body section.

The cooling system according to the invention affords the advantage that the engine is warmed more quickly when starting from cold, leading inter alia to longer service life for the motor oil and hence also for the engine. Moreover, fuel consumption and engine emissions will decrease, since the engine can be warmed effectively when starting. The invention is also so configured as not to affect how the body's supplementary heater or RAMP connection is arranged or used, which means that they may be fitted in usual ways.

A further advantage of the invention is that the warming of the engine can be ensured despite the heating circuits connected to the engine circuit differing in size, composition and configuration.

A further advantage of the invention is the possibility of using just one ordinary thermostat, which may in principle take the form of a two-way valve. This makes it easier and less expensive to implement the novel solution in the manufacture of new vehicles.

A further advantage of the solution is that the thermostat's leakage flow enables it to open the flow to the engine circuit even when the engine and other electrics and electronics on board the vehicle are switched off but the supplementary heater or external heat supply, e.g. via a RAMP system, is connected. The invention is thus an entirely mechanical solution with no need for electrical energy or electronic control.

Further features and advantages of the invention are indicated by the more detailed description of the invention set out below and the attached drawings and other claims.

### BRIEF LIST OF DRAWINGS

The invention is described below in more detail in the form of some preferred embodiment examples with reference to the attached drawings.
**Figure 1** is a schematic block diagram of a coolant system according to the invention intended for a vehicle.
**Figure 2** depicts a cross-section through the thermostat and its location at the junction point between the body circuit and the engine circuit, with a leakage flow duct which, even when the thermostat is closed, allows a limited amount of coolant to pass from the body circuit to the engine circuit and to flow past the body thermostat's temperature-sensitive wax element.
**Figure 3** is a block diagram corresponding to that in Figure 1 but with no circulation pump and without a bypass line with check valve in the body circuit.

### DESCRIPTION OF PREFERRED EMBODIMENTS

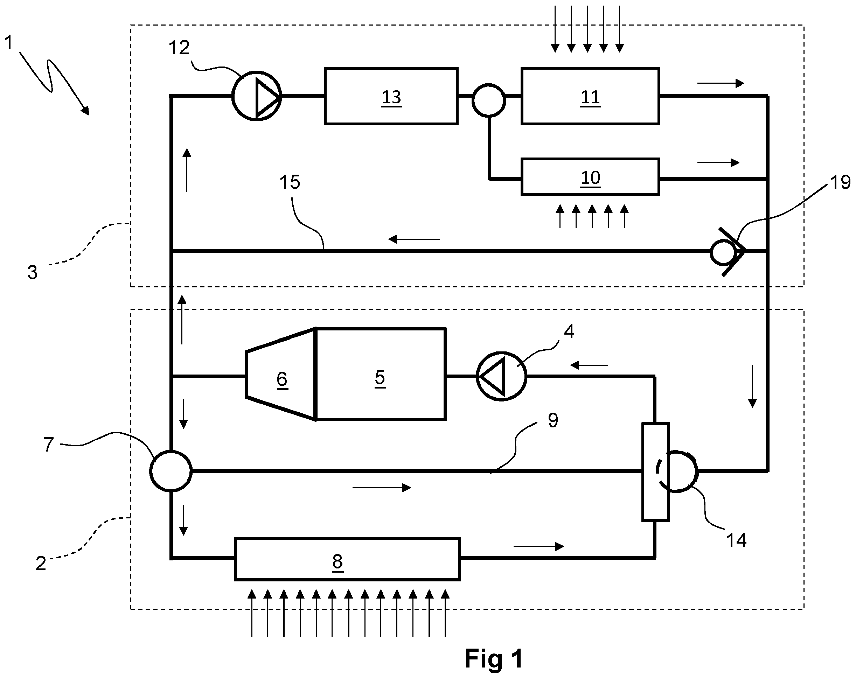

**Figure 1** is a schematic block diagram of a coolant system 1 according to the invention intended for a vehicle. This coolant system comprises mainly two subsystems, viz. an engine circuit 2 and a body circuit 3. The object of the engine circuit 2 is to maintain the vehicle's engine temperature at a desired level during operation and to distribute necessary heat to the body circuit 3. The function of the body circuit is mainly to defrost the vehicle's windscreen and warm the driving and passenger spaces on board the vehicle.

The engine circuit 2 comprises a conventional liquid system which uses a pump 4, usually driven mechanically by the engine, to circulate coolant through the engine 5 and also, where applicable, the gearbox 6, via a radiator thermostat 7 and radiator 8 when the radiator thermostat is open, or through a bypass line 9 when the radiator thermostat is closed, back to the pump 4.

The liquid in the system is used not only to cool the engine but also to warm it when starting from cold and for heating purposes in the vehicle's body section (not depicted), e.g. in a defroster 10, and to heat the driving and passenger spaces via radiators 11 provided for the purpose.

The heating systems, the radiators 11, in passenger spaces in buses, trucks and cars may vary in size depending on the respective requirements, chassis superstructure and the purpose of the application. A vehicle used in warm climates may for example need only a small heat exchanger to defrost the windscreen, whereas a vehicle in cold climates may need a significantly larger heating circuit. Heating systems may be configured both with and without a separate coolant pump 12 and both with or without a supplementary heater 13. Supplementary heaters may differ in type and size and be used to supply extra heat to both the body circuit 3 and the engine circuit 2. Warming the engine is important for lengthening its service life, reducing fuel consumption and reducing emissions. An important object of the invention is to safeguard the engine warming process irrespective of the configuration of the vehicle's body circuit 3.

A body thermostat 14 separates the two subsystems 2, 3, and the body circuit 3 is provided with a bypass line 15 of its own to enable it to circulate its own coolant before the body thermostat opens. Previous known installations have circuits which ensure that when a supplementary heater 13 is used the body circuit reaches operating temperature before the engine takes part of the heat. In such installations the engine will also reach operating temperature more quickly because there is no need to warm the body circuit 3. However, these installations usually regulate the temperature in the body circuit 3 and then require a supplementary heater in the body circuit in cases where the circuits 2, 3 are kept separate. In contrast, the object of the present invention is to ensure the warming of the engine irrespective of whether a supplementary heater is used or not. In this solution the body thermostat 14 is so situated that its heat-sensitive wax element is in the engine circuit 2 and upstream of the engine's pump in order to monitor and be acted upon by the engine-tempered coolant.

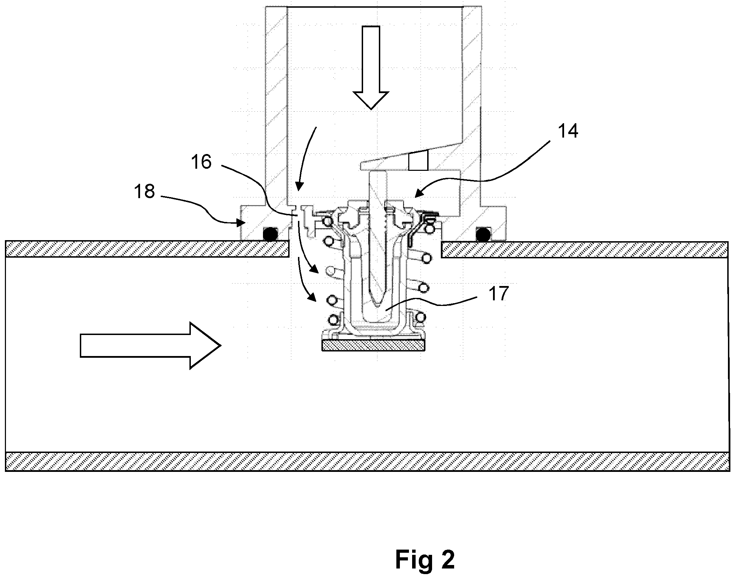

**Figure 2** depicts a cross-section through the body thermostat 14 and its location at the junction point between the body circuit 3 and the engine circuit 2, with a leakage flow duct 16 which has an aperture cross-section appropriate to the purpose and which, even before the body thermostat begins to open, i.e. when it is fully closed, allows a limited small amount of coolant to pass from the body circuit 3 to the engine circuit 2 and flow past the body thermostat's temperature-sensitive wax element 17.

Since an important object is that the body thermostat 14 should ensure the warming of the engine, the temperature-sensitive element 17 is therefore situated in the engine circuit's coolant flow. The location and configuration of the body thermostat and its fastening enable it to react to the temperature in both circuits 2, 3 at the same time.

The thermostat location according to the invention prevents inter alia a disadvantageous cold flushing of the engine when the body thermostat 14 begins to open, by using its temperature-sensitive element 17 to cool the liquid from the body circuit so that it does not open too quickly but only gradually until the temperature in the body circuit 3 has risen to the opening temperature of the body thermostat.

The leakage flow duct 16 may be situated in the body thermostat 14, in the thermostat housing 18 or take the form of an external line (not depicted) between the body circuit 3 and the engine circuit 2. This makes it possible for the body circuit to initially receive a heat surplus from the engine circuit even if the body thermostat is closed. The object is inter alia to ensure that coolant with sufficient heat reaches the body circuit and its defroster 10.

The leakage flow duct 16 combined with the location of the body thermostat 14 also makes it possible for the body thermostat to open when the engine is not in operation and is cold but there is sufficient warm coolant in the body circuit, e.g. when a supplementary heater 13 is used. Thus it is advantageous that not only the body section 3 becomes warm but also that the engine can begin to be warmed to prevent a cold start and the associated problems.

There are also other ways of supplying heat to the body circuit 3 in addition to using a supplementary heater 13. Urban buses in cold climates for example are supplied with warm cooling water via an external heating circuit (not depicted) when stationary at a depot, a so-called RAMP system. The opening temperature of the body thermostat 14 will thus be appropriate with advantage both to the engine's operating temperature but also to the temperature level in the body circuit when a supplementary heater 13 or external heat is connected.

The leakage flow duct 16 also makes it possible for the whole coolant system, i.e. both the engine circuit 2 and the body circuit 3, to be replenished with/drained of coolant via the engine circuit 2, as is usual in most known liquid systems.

A check valve 19 (see Figure 1) is provided in the body circuit bypass line 15 with the main purpose of preventing the engine circuit's pump 4 from pumping coolant through the body circuit bypass line. This is particularly desirable when the engine has risen to operating temperature and both the engine circuit's radiator thermostat 7 and the body thermostat 14 have opened. In this situation the liquid in the engine circuit has to pass through the engine radiator 8 in order to provide the engine with desired and necessary cooling. However, in cases where the body circuit is provided with its own circulation pump 12, the check valve 19 will allow it to circulate the liquid freely in the body circuit.

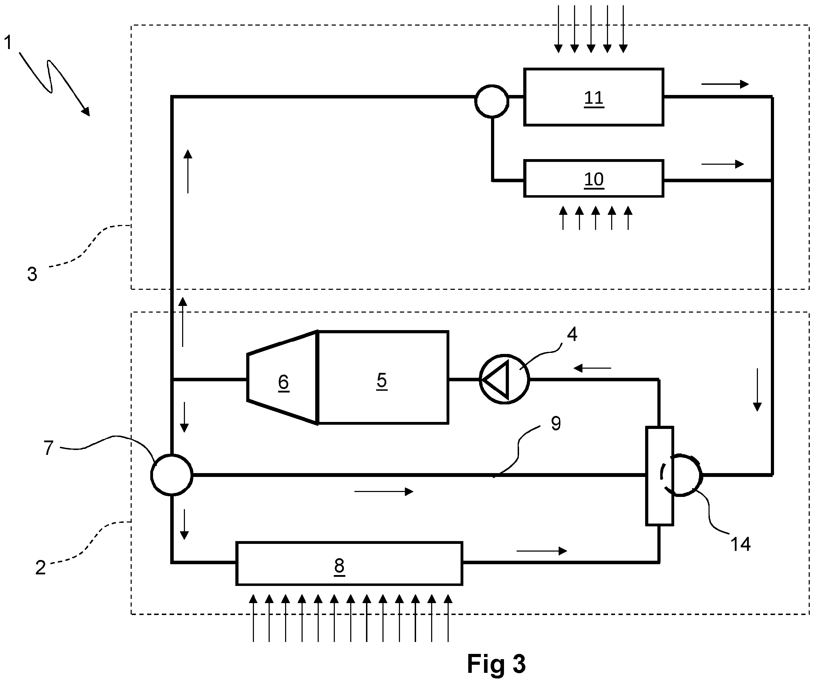

**Figure 3** is a block diagram corresponding to that in Figure 1 but with no circulation pump 12 in the body circuit 3 and consequently omitting the bypass line 15 with check valve 19.

### Some conceivable operating situations

In cold starts with both the engine 5 and the body circuit 3 cold, no supplementary heater 13 in use and the engine kept separate from the body circuit until the body thermostat 14 opens, the leakage flow duct 16 releases warm coolant to critical parts of the body circuit, e.g. the defroster 10 for use in removing snow, ice and moisture from the vehicle's windscreen. Achieving this desired function involves requirements for its initial flow prioritisation in the body circuit. The leakage flow duct is so dimensioned that the engine's desired warming process continues to be assured. The body thermostat 14 is flushed by the coolant passing before the engine pump inlet, and opens at a predetermined thermostat opening temperature. The opening process is progressive/gradual as the body circuit's coolant cold-flushes the body thermostat's temperature-sensitive element 17. The check valve 19 ensures that the engine circuit's pump 4 does not pump coolant into the body circuit bypass line 15, so the flow through the radiator when the radiator thermostat 7 has opened is not affected.

In cold starts with both the engine and the body circuit 3 cold and the supplementary heater 13 connected, the two circuits 2, 3 are kept separate from one another until the engine has reached operating temperature. The supplementary heater's contribution to warming the engine may differ depending on the dimensioning of the leakage flow duct 16.

In a case where the engine is switched off and the body circuit 3 and the engine circuit 2 are warmed by a supplementary heater 13 or external heat (RAMP), the body thermostat 14 opens so that both subcircuits 2, 3 are warmed. If the heat flow comes from the body circuit, the leakage flow duct 16 ensures that the body thermostat opens to the engine circuit so that it too will be warmed.

The above description is primarily intended to facilitate understanding of the invention and is of course not confined to the embodiments indicated, since other variants of the invention are also possible and conceivable within the scope of the inventive concept and the protective scope of the claims set out below.

## Claims

1. A system primarily intended to control/regulate the liquid flow in a vehicle's coolant system (1)consisting of an engine circuit and a body circuit for heating purposes in the vehicle's body section, such that a body thermostat (14) comprising a temperature-sensitive element (17) is provided at the junction point between the vehicle's engine circuit (2) and body circuit (3), and a leakage flow duct (16) is also provided between said engine circuit (2) and body circuit (3), wherein the temperature-sensitive element (17) of the body thermostat (14) is situated in the liquid flow of the engine circuit (2) in order to be exposed to engine-tempered coolant and open the body thermostat (14) when the liquid in the engine circuit (2) reaches or exceeds a predetermined temperature level, and thereby ensure the warming of the engine (5), and that the body circuit (3) is to an intended extent provided with warm coolant
**characterised**
**in that** the temperature-sensitive element (17) of the body thermostat (14) is situated in the liquid flow of the engine circuit (2) upstream of the engine's pump (4) and in that a bypass line (15) is provided in the body circuit (3) so that liquid can circulate freely in the body circuit (3) if the body thermostat (14) is closed, i.e. before the cooling water in the engine circuit (2) and/or the body circuit (3) reaches a high enough temperature to open the body thermostat (14).

2. A system according to claim 1,
**characterised**
**in that** a leakage flow duct (16) is provided at or adjacent to a junction point between the engine circuit (2) and the body circuit (3) to ensure that a limited amount of coolant can pass from the body circuit (3) to the engine circuit (2) and flow past the temperature-sensitive element (17) of the body thermostat (14) even before the body thermostat (14) has begun to open, so that the defroster (10) in the body circuit (3) is initially supplied with warm coolant from the engine circuit (2) .

3. A system according to either or both of the foregoing claims,
**characterised**
**in that** the leakage flow duct (16) is situated in the thermostat housing (18) adjacent to the fastening of the body thermostat (14).

4. A system according to any one or more of the foregoing claims,
**characterised**
**in that** the leakage flow duct (16) is situated in the body thermostat (14).

5. A system according to any one or more of the foregoing claims,
**characterised**
**in that** the leakage flow duct (16) takes the form of an external line running between the body circuit (3) and the engine circuit (2).

6. A vehicle provided with a system for control/regulation of the liquid flow in a vehicle's coolant system according to any one of the foregoing claims.

## Patentansprüche

1. System, das hauptsächlich dazu vorgesehen ist, den Flüssigkeitsstrom in einem Fahrzeugkühlsystem (1) zu steuern/regeln, welches aus einem Motorkreislauf und einem Karosseriekreislauf für Heizzwecke in dem Karosseriebereich des Fahrzeugs besteht, derart, dass ein Karosseriethermostat (14) mit einem temperaturempfindlichen Element (17) an dem Knotenpunkt zwischen dem Motorkreislauf (2) und dem Karosseriekreislauf (3) des Fahrzeugs vorhanden ist, und auch ein Leckstromkanal (16) zwischen dem Motorkreislauf (2) und dem Karosseriekreislauf (3) vorhanden ist, wobei das temperaturempfindliche Element (17) des Karosseriethermostats (14) sich in dem Flüssigkeitsstrom des Motorkreislaufes (2) befindet, um dem vom Motor temperierten Kühlmittel ausgesetzt zu sein und den Karosseriethermostat zu öffnen, wenn die Flüssigkeit in dem Motorkreislauf (2) ein vorbestimmtes Temperaturniveau erreicht oder übersteigt, und dadurch das Aufwärmen des Motors (5) sicherzustellen, und dass der Karosseriekreislauf (3) in einem vorgesehenen Ausmaß mit warmem Kühlmittel beliefert wird,
**dadurch gekennzeichnet, dass** das temperaturempfindliche Element (17) des Karosseriethermostats (14) stromaufwärts einer Pumpe (4) des Motors in dem Flüssigkeitsstrom des Motorkreislaufes (2) angeordnet ist und dass eine Bypassleitung (15) in dem Karosseriekreislauf (3) vorhanden ist, so dass Flüssigkeit frei in dem Karosseriekreislauf (3) zirkulieren kann, wenn der Karosseriethermostat (14) geschlossen ist, d. h., bevor das Kühlwasser in dem Motorkreislauf und/oder dem Karosseriekreislauf (3) eine Temperatur erreicht, die hoch genug ist, um den Karosseriethermostat (14) zu öffnen.

2. System nach Anspruch 1,
**dadurch gekennzeichnet, dass** ein Leckstromkanal (16) an oder benachbart einem Knotenpunkt zwischen dem Motorkreislauf (2) und dem Karosseriekreislauf (3) vorhanden ist, um sicherzustellen, dass eine begrenzte Menge an Kühlmittel aus dem Karosseriekreislauf (3) in den Motorkreislauf (2) gelangen und an dem temperaturempfindlichen Element (17) des Karosseriethermostats (14) vorbeiströmen kann selbst bevor der Karosseriethermostat (14) begonnen hat zu öffnen, so dass der Defroster (10) in dem Karosseriekreislauf (3) anfangs mit warmem Kühlmittel aus dem Motorkreislauf (2) versorgt wird.

3. System nach einem oder beiden der vorhergehenden Ansprüche,
**dadurch gekennzeichnet, dass** der Leckstromkanal (16) sich in dem Thermostatgehäuse (18) benachbart zur Befestigung des Karosseriethermostats (14) befindet.

4. System nach einem oder mehreren der vorhergehenden Ansprüche, **dadurch gekennzeichnet, dass** der Leckstromkanal (16) sich in dem Karosseriethermostat (14) befindet.

5. System nach einem oder mehreren der vorhergehenden Ansprüche, **dadurch gekennzeichnet, dass** der Leckstromkanal (16) die Gestalt einer externen Leitung hat, die zwischen dem Karosseriekreislauf (3) und dem Motorkreislauf (2) verläuft.

6. Fahrzeug, das mit einem System zur Steuerung/Regelung des Flüssigkeitsstroms in einem Fahrzeugkühlsystem nach einem der vorhergehenden Ansprüche ausgestattet ist.

## Revendications

1. Système principalement destiné à contrôler/ réguler le débit de liquide dans le système de refroidissement d'un véhicule (1), composé d'un circuit moteur et d'un circuit de carrosserie à des fins de chauffage dans la section de carrosserie du véhicule, de sorte qu'un thermostat de carrosserie (14) comprenant un élément sensible à la température (17) est prévu au point de jonction entre le circuit moteur du véhicule (2) et le circuit de carrosserie (3), et un conduit d'écoulement de fuite (16) est également prévu entre ledit circuit moteur (2) et le circuit de carrosserie (3), dans lequel l'élément sensible à la température (17) du thermostat de carrosserie (14) est situé dans le flux de liquide du circuit moteur (2) afin d'être exposé au liquide de refroidissement tempéré par le moteur et d'ouvrir le thermostat de carrosserie (14) lorsque le liquide dans le circuit moteur (2) atteint ou dépasse un niveau de température prédéterminé, et assure ainsi le réchauffement du moteur (5), et que le circuit de carrosserie (3) est dans une mesure voulue alimenté en liquide de refroidissement chaud
**caractérisé**
**en ce que** l'élément sensible à la température (17) du thermostat de carrosserie (14) est situé dans le flux de liquide du circuit moteur (2) en amont de la pompe du moteur (4) et **en ce qu'**une conduite de dérivation (15) est prévue dans le circuit de carrosserie (3) pour que le liquide puisse circuler librement dans le circuit de carrosserie (3) si le thermostat de carrosserie (14) est fermé, c'est-à-dire avant que l'eau de refroidissement dans le circuit moteur (2) et/ ou le circuit de carrosserie (3) n'atteigne une température suffisamment élevée pour ouvrir le thermostat de carrosserie (14).

2. Système selon la revendication 1,
**caractérisé**
**en ce qu'**un conduit d'écoulement de fuite (16) est prévu au niveau ou à côté d'un point de jonction entre le circuit moteur (2) et le circuit de carrosserie (3) pour garantir qu'une quantité limitée de liquide de refroidissement peut passer du circuit de carrosserie (3) au circuit moteur (2) et s'écouler devant l'élément sensible à la température (17) du thermostat de carrosserie (14) avant même que le thermostat de carrosserie (14) n'ait commencer à s'ouvrir, de sorte que le dégivreur (10) dans le circuit de carrosserie (3) est initialement alimenté en liquide de refroidissement chaud à partir du circuit moteur (2).

3. Système selon chacune des ou les deux revendications précédentes,
**caractérisé**
**en ce que** le conduit d'écoulement de fuite (16) se trouve dans le boîtier du thermostat (18) à côté de la fixation du thermostat de carrosserie (14).

4. Système selon l'une quelconque ou plusieurs des revendications précédentes,
**caractérisé**
**en ce que** le conduit d'écoulement de fuite (16) se trouve dans le thermostat de carrosserie (14).

5. Système selon l'une quelconque ou plusieurs des revendications précédentes,
**caractérisé**
**en ce que** le conduit d'écoulement de fuite (16) prend la forme d'une ligne externe entre le circuit de carrosserie (3) et le circuit moteur (2).

6. Véhicule fourni avec un système pour le contrôle/ la régulation du débit de liquide dans un système de refroidissement d'un véhicule selon l'une quelconque des revendications précédentes.
